# EUROPÄISCHE PATENTSCHRIFT

(11) **EP 2 504 379 B1**
(45) Veröffentlichungstag und Bekanntmachung des Hinweises auf die Patenterteilung: **02.07.2014**
(21) Anmeldenummer: 10781623.3
(22) Anmeldetag: 24.11.2010
(51) Int. Cl.: C08G 63/672, C08G 63/688, C11D 3/37

(54) **VERWENDUNG VON POLYESTER-KONZENTRATEN MIT HOHER LÖSESTABILITÄT UND VERGRAUUNGSINHIBIERENDER WIRKUNG IN WASCH- UND REINIGUNGSMITTELN**
USE OF POLYESTER CONCENTRATES HAVING HIGH STABILITY IN SOLUTION AND HAVING A GREYING-INHIBITING EFFECT IN DETERGENT COMPOSITIONS
UTILISATION DE CONCENTRÉS DE POLYESTER AYANT UNE GRANDE STABILITÉ DE SOLUTION ET UN EFFET ANTIREDÉPOSITION DANS DES COMPOSITIONS DETERGENTES

(30) Priorität: 27.11.2009 DE 102009056126
(43) Veröffentlichungstag der Anmeldung: 03.10.2012
(73) Patentinhaber: Clariant Finance (BVI) Limited, Road Town, Tortola (VG)
(72) Erfinder: MORSCHHAEUSER, Roman, 55122 Mainz (DE); DUECKER, Barbara, 55122 Mainz (DE); LANG, Frank-Peter, 65795 Hattersheim (DE); BORCHERS, Georg, 61231 Bad Nauheim (DE); NAUMANN, Peter, 65232 Taunusstein (DE)
(74) Vertreter: Paczkowski, Marcus
(86) Internationale Anmeldenummer: PCT/EP2010/007125
(87) Internationale Veröffentlichungsnummer: WO 2011/063945

(56) Entgegenhaltungen:
- WO-A1-95/02030
- WO-A1-2007/079850

## Beschreibung

Die Erfindung betrifft die Verwendung wässriger Polyester-Konzentrate (Soil Release Polymere SRP), die sich durch eine gute Lösungsstabilität auszeichnen sowie in der Waschflotte eine stark vergrauungsinhibierende Wirkung auf Textilien zeigen, in Wasch-und Reinigungsmitteln, in einem Weichspülmittel, in Textilpflegemitteln und Mitteln zur Ausrustung von Textilien.

Der Einsatz von Polyestern in Waschmitteln zur Verbesserung der Schmutzablösung von Textilien, zur Reduzierung der Wiederanschmutzung, zum Schutz der Fasern bei mechanischer Belastung und zum Ausrüsten der Gewebe mit einem Anti-Knittereffekt ist bekannt. Eine Vielzahl von Polyestertypen und deren Verwendung in Wasch- und Reinigungsmitteln sind in der Patentliteratur beschrieben.

US 4,702,857 beansprucht Polyester aus Ethylenglykol, 1,2-Propylenglykol oder Mischungen daraus mit hohen Ethylenglykolanteilen, Polyethylenglykol mit mindestens 10 Glykoleinheiten, das an einem Ende mit einer kurzkettigen Alkylgruppe, insbesondere mit einer Methylgruppe verschlossen ist, einer Dicarbonsäure bzw. -ester und optional Alkalisalzen von sulfonierten aromatischen Dicarbonsäuren.

In US 4,427,557 werden Polyester mit Molekulargewichten im Bereich von 2.000 bis 10.000 g/mol, hergestellt aus den Monomeren Ethylenglykol, Polyethylenglykol mit Molekulargewichten von 200 bis 1.000 g/mol, aromatischen Dicarbonsäuren und Alkalisalzen von sulfonierten aromatischen Dicarbonsäuren und gegebenenfalls aus geringen Mengen an aliphatischen Dicarbonsäuren, beispielsweise Glutarsäure, Adipinsäure, Bernsteinsäure, Glutarsäure, Pimelinsäure, Korksäure, Azelainsäure, Sebacinsäure und 1,4-Cyclohexandicarbonsäure beschrieben und deren Anti-Knittereffekt und soil release Wirkung auf Polyester-Gewebe oder auf Polyester-BaumwollMischgewebe ausgelobt.

US 4,721,580 offenbart Polyester mit Terephthalat-Einheiten und sulfogruppenhaltigen Endgruppen, insbesondere sulfoethoxylierte Endgruppen MO₃S(CH₂CH₂O)ₙ-H und lobt deren Verwendung in Waschmitteln und Weichspülmitteln aus.

US 4,968,451 beschreibt Polyester mit sulfogruppenhaltigen Endgruppen, erhalten durch Copolymerisation von (Meth)allylalkohol, Alkylenoxid, Aryldicarbonsäure und C₂-C₄-Glykol und anschließender Sulfonierung.

In US 5,691,298 werden Polyester als SRP mit verzweigtem Rückgrat aus Di- oder Polyhydroxysulfonat, Terephthalat- und 1,2-Oxyalkylenoxy-Einheiten mit nichtionischen oder anionischen Endgruppen beansprucht.

In US 5,415,807 wird dargelegt, dass Soil Release Polymere mit sulfonierten Polyethoxy/Propoxy-Endgruppen zur Kristallisation neigen, woraus eine Reduzierung der Soil Release Effekte resultiert.

EP 1 966 273 A1 und WO 2008/110318 A2 offenbaren SRP aus Terephthalsäure, Sulfoisophthalsäure und (Poly)alkylenglykolen, die ein molares Propylenglykol/Ethylenglykol-Verhältnis von kleiner als 1,7 haben.

Im Zuge eines sich wandelnden Kundenverhaltens nimmt der Anteil der Flüssigwaschmittel am Gesamtwaschmittelmarkt weltweit zu. Mit der Änderung der Darreichungsform gehen allerdings auch einige unerwünschte Nebeneffekte einher, die im physikalischen Aufbau von Flüssigwaschmitteln begründet liegen. Die nur in Pulvern eingesetzten Zeolithe reduzieren die Wasserhärte der Waschflotte effektiv und verhindern damit die Bildung von Kalkseife, die sich als Grauschleier auf Geweben niederschlägt und speziell bei weißen Geweben zu unerwünschter Vergrauung der Textilien beiträgt. Die chemisch-physikalische Natur der Zeolithe (Feststoffe) verbietet aber den Einsatz dieser Waschmittelkomponente in Flüssigformulierungen. Dieser Nachteil führt dazu, dass auch heute das Problem der Vergrauung von Textilen bei Flüssigwaschmitteln noch nicht zufrieden stellend gelöst wurde. Zwar kann dieser Nachteil gegenüber Waschpulvern durch Zusatz von Co-buildern auf Polyacrylsäurebasis und Cellulose-basierenden Vergrauungsinhibitoren abgemildert werden, allerdings nur unter Inkaufnahme weiterer formulierungstechnischer Nachteile wie Trübung, hoher Viskosität, oder unerwünschtem rheologischem Profil. Da neben Zeolithen bisher auch keine Bleichsysteme in Flüssigformulierungen in Einkammersystemen eingesetzt werden können, führte dies bisher stets dazu, dass Pulver in allgemein anerkannten Testreihen den Flüssigwaschmitteln als überlegen eingestuft werden.

Um den Kundenwünschen entgegentreten zu können, ist die Entwicklung effektiver Vergrauungsinhibitoren für Flüssigwaschmittel notwendig, die einerseits die gewünschte Leistung in der Waschflotte erbringen und andererseits die Rheologie und die Optik der jeweiligen Formulierung nicht negativ beeinflussen. Im Idealfall soll die Herstellung klarer Flüssigwaschmittel ermöglicht werden.

Es ist literaturbekannt, das Terephthalat-basierende Soil Release Polyester in der Lage sind, effektiv die Vergrauung von Textilien zu verhindern. Es zeigte sich auch, dass geladene Strukturen, wie beispielsweise anionische Soil Release Polyester, insgesamt sehr viel wirksamer sind als mit entsprechender Menge dosierter nichtionischer Typen. Trotz ihres überlegenen vergrauungsinhibierenden Profils werden anionische Polyester bisher nur in Pulverformulierungen eingesetzt. Grund hierfür ist die Schwierigkeit, auf Sulfogruppen basierende Polyester in wässrige Lösung zu bringen. Einerseits ist das Löseverhalten der Polymere sehr stark von der Temperatur abhängig. Viele anionische Polyester lösen sich erst ab Temperaturen oberhalb von 25 °C nennenswert in Wasser auf. Zum anderen verhindern Kristallisationsphänomene eine Lösung bei niedrigeren Temperaturen. Dieses Kristallisationsverhalten führt auch in wässriger Lösung dazu, dass die in Lösung befindlichen Polymerketten nachträglich kristallisieren und dabei Klein-und Kleinstkristalle bilden, die sich zu einem Netzwerk zusammenlagern und die Rheologie ungünstig beeinflussen. Derartige Lösungen oder Dispersionen lassen sich mit sinnvollen Feststoffgehalten (> 10 Gew.-%) nicht mehr in Flüssigwaschmittel einarbeiten.

Ziel der Erfindung war es demzufolge, Polyesterstrukturen basierend auf sulfogruppenhaltigen Monomeren zu finden, die einerseits beim Einsatz in Flüssigwaschmitteln eine sehr gute vergrauungsinhibierende Leistung zeigen und zum anderen in wässriger Lösung eine nur minimale Kristallisationsneigung zeigen und als Lösung lagerstabil sind. Diese als Konzentrat (> 10 Gew.-% Aktivgehalt) bezeichneten Polymerlösungen sollen für die Anwendung in Flüssigwaschmittelformulierungen geeignet und dabei möglichst klar und niedrigviskos sein.

Überraschenderweise wurde gefunden, dass nachstehende sulfogruppenhaltige Polyester mit einem bestimmten Propylenglykol/Ethylenglykol (PG/EG)-Verhältnis die erfindungsgemäße Aufgabe lösen.

Gegenstand der Erfindung ist die Verwendung wässriger Polyester-Konzentrate mit einem Gewichtsanteil an Polyester von 12 bis 60 %, vorzugsweise 15 bis 60 %, besonders bevorzugt 20 bis 50 %, insbesondere 30 bis 45 %, wobei die Polyester erhältlich sind durch Polymerisation der Komponenten, ausgewählt aus
a) einer oder mehreren sulfogruppenfreien aromatischen Dicarbonsäuren und/ oder deren Salzen und/ oder deren Anhydriden und/oder deren Ester,
b) optional einer oder mehreren sulfogruppenhaltigen Dicarbonsäuren, deren Salzen und/oder deren Anhydriden und/oder deren Ester,
c) 1,2-Propylenglykol,
d) Ethylenglykol,
e) einer oder mehreren Verbindungen der Formel (1)

   R¹O(CHR²CHR³O)ₙH (1)

   wobei
   - R¹: für eine lineare oder verzweigte, gesättigte oder ungesättigte Alkylgruppe mit 1 bis 22 C-Atomen steht, vorzugsweise für C₁-C₄-Alkyl, insbesondere Methyl,
   - R² und R³: unabhängig voneinander für Wasserstoff oder für eine Alkylgruppe mit 1 bis 4 Kohlenstoffatomen, vorzugsweise für Wasserstoff und/oder Methyl stehen und
   - n: eine Zahl von 1 bis 50, bevorzugt 2 bis 10 ist,
f) optional eine oder mehrere Verbindungen der Formel (2)

   H-(OCH₂CH₂)ₘ-SO₃X (2)

   wobei
   - m: für eine Zahl 1 bis 10 und
   - X: für Wasserstoff oder ein Alkalimetallion steht, und
g) optional ein oder mehrere vernetzend wirkende polyfunktionelle Verbindungen,
mit der Maßgabe, dass mindestens eine der Komponenten b) oder f) vorhanden ist, und mit der weiteren Maßgabe, dass das molare Verhältnis der Komponenten c) 1,2-Propylenglykol zu d) Ethylenglykol größer oder gleich 1,60 ist in Wasch- und Reinigungsmitteln, in einem Weichspülmittel, in Textilpflegemitteln und Mitteln zur Ausrüstung von Textilien.

Zweckmäßigerweise beträgt das molare Verhältnis 1,2-Propylenglykol (PG) : Ethylenglykol (EG) 1,60 bis 20,0, bevorzugt 1,7 bis 10,0, insbesondere 2,0 bis 8,0, besonders bevorzugt 2,5 bis 7,0, ganz besonders bevorzugt 2,7 bis 5,0.

Bevorzugt sind Polyester, erhältlich durch Polymerisation der Komponenten a) bis g) in folgenden Molverhältnissen, bezogen auf 1 Mol Komponente a):
0 bis 4 Mol, vorzugsweise 0,1 bis 2 Mol, insbesondere 0,2 bis 1,5 Mol, ganz besonders bevorzugt 0,3 bis 1,1 Mol, Komponente b),
0,1 bis 4 Mol, vorzugsweise 0,5 bis 3 Mol, insbesondere 0,6 bis 2,5 Mol, ganz besonders bevorzugt 0,8 bis 1,5 Mol der Diol-Komponente c) + d),
0,1 bis 4 Mol, vorzugsweise 0,2 bis 2 Mol, insbesondere 0,3 bis 1,0 Mol, ganz besonders bevorzugt 0,3 bis 0,8 Mol, Komponente e),
0 bis 4 Mol, vorzugsweise 0,1 bis 2 Mol, insbesondere 0,2 bis 1,0 Mol, ganz besonders bevorzugt 0,3 bis 0,8 Mol, Komponente f),
0 bis 0,2 Mol, vorzugsweise 0 bis 0,1 Mol, insbesondere 0 Mol, Komponente g), mit den vorstehend genannten Maßgaben.

Weiterhin bevorzugt sind Polyester, erhältlich durch Polymerisation der Komponenten a) bis g) in folgenden Molverhältnissen, bezogen auf 1 Mol Komponente a):
0,1 bis 2 Mol, insbesondere 0,2 bis 1,5 Mol, ganz besonders bevorzugt 0,3 bis 1,1 Mol, Komponente b),
0,5 bis 4 Mol, insbesondere 0,6 bis 3 Mol, ganz besonders bevorzugt 0,8 bis 2,5 Mol der Diol-Komponente c) + d),
0,1 bis 4 Mol, vorzugsweise 0,2 bis 2 Mol, insbesondere 0,3 bis 1,0 Mol, ganz besonders bevorzugt 0,3 bis 0,8 Mol, Komponente e),
0 Mol Komponente f),
0 Mol Komponente g),
mit den vorstehend genannten Maßgaben.

Bevorzugte Verbindungen der Komponente a) sind Terephthalsäure, insbesondere C₁-C₄-Alkylester der Terephthalsäure, beispielsweise Terephthalsäuredimethylester, sowie Isophthalsäure und C₁-C₄-Alkylester der Isophthalsäure.

Bevorzugte Verbindungen der Komponente b) sind 5-Sulfoisophthalsäure, insbesondere 5-Sulfoisophthalsäuredi(C₁-C₄)alkylester und deren Alkalimetallsalze, beispielsweise Alkalimetallsalze der 5-Sulfoisophthalsäure und 5-Sulfo-isophthalsäure-dimethylester-Natriumsalz oder -Lithiumsalz.

Bevorzugte Verbindungen der Komponente e) sind einseitig endverschlossene Polyalkylenglykole (Endstopfen), bevorzugt Poly[ethlyenglykol-co-propylenglykol]-monomethylether mit mittleren Molekulargewichten von ca. 200 bis 2.000 g/mol, besonders bevorzugt Polyethylenglykolmonomethylether der Formel (1 a)

CH₃-O-(C₂H₄O)ₙ-H (1a)

mit n = 2 bis 10, bevorzugt mit n = 3 bis 5, insbesondere mit n = 4.

Bevorzugte Verbindungen der Komponente f) sind solche der Formel (2a)

H-(OCH₂CH₂) ₘ-SO₃X (2a),

wobei
- m: für eine Zahl von 1 bis 4, besonders bevorzugt 1 und 2, und
- X: für Wasserstoff, Natrium oder Kalium, steht.

Bevorzugte Verbindungen der Komponente g) sind vernetzend wirkende polyfunktionelle Verbindungen mit 3 bis 6 zur Veresterungsreaktion befähigten funktionellen Gruppen, beispielsweise Säure-, Alkohol-, Ester-, Anhydrid- oder Epoxygruppen. Dabei sind auch unterschiedliche Funktionalitäten in einem Molekül möglich. Als bevorzugte Beispiele können hierbei Zitronensäure, Äpfelsäure, Weinsäure und Gallussäure, besonders bevorzugt 2,2-Dihydroxymethylpropionsäure benannt werden.

Weiterhin können mehrwertige Alkohole, wie Pentaerythrol, Glycerin, Sorbitol und Trimethylolpropan eingesetzt werden.

Weiterhin bevorzugt sind mehrwertige aliphatische und aromatische Carbonsäuren, wie Benzol-1,2,3-tricarbonsäure (Hemimellithsäure), Benzol-1,2,4-tricarbonsäure (Trimellithsäure), besonders bevorzugt Benzol-1,3,5-tricarbonsäure (Trimesithsäure).

Der Gewichtsanteil an Komponente g), bezogen auf die Gesamtmasse der Polyester, beträgt bevorzugt 0 bis 10 Gew.-%, besonders bevorzugt 0 bis 5 Gew.-% und insbesondere bevorzugt 0 bis 3 Gew.-%, ganz besonders bevorzugt 0 Gew.-%.

Die Polyester haben im Allgemeinen zahlenmittlere Molekulargewichte im Bereich von 700 bis 50.000 g/mol, bevorzugt von 800 bis 25.000 g/mol, insbesondere 1.000 bis 15.000 g/ mol, besonders bevorzugt 1.200 bis 12.000 g/mol.

Das zahlenmittlere Molekulargewicht wird bestimmt mittels Größenausschlusschromatographie in wässriger Lösung unter Verwendung einer Kalibrierung mit Hilfe eng verteilten Polyacrylsäure-Na-Salz Standards. Alle Molekulargewichtsangaben in dieser Schrift beziehen sich auf das zahlenmittlere Molekulargewicht.

Des Weiteren können die erfindungsgemäß eingesetzten Polyester zusätzlich zu den oben beschriebenen Komponenten a) bis g) Strukturelemente einer aliphatischen Dicarbonsäure, bevorzugt 1,4-Cyclohexandicarbonsäure, enthalten.

Der Gewichtsanteil der eingesetzten aliphatischen Dicarbonsäure kann 1 bis 15 %, bevorzugt 3 bis 10 %, besonders bevorzugt 5 bis 8 %, bezogen auf die Gesamtmenge der eingesetzten Monomere betragen.

Die Synthese der erfindungsgemäß eingesetzten Polyester erfolgt nach an sich bekannten Verfahren durch Polykondensation der Komponenten a) bis g). Zweckmäßigerweise werden die oben genannten Komponenten unter Zusatz eines Katalysators zunächst bei Normaldruck auf Temperaturen von 160 bis ca. 220 °C unter Verwendung einer Inert-Atmosphäre erhitzt, vorzugsweise in Gegenwart eines Salzes einer C₁-C₃-Alkyl-Carbonsäure, insbesondere ein dehydratisiertes oder partiell hydratisiertes Natriumacetat CH₃COONa x (H₂O)ₓ, wobei ₓ für eine Zahl im Bereich von 0 bis 2,9 steht, und wobei dieses Salz in Gewichtsmengen von 0,5 % bis 30 %, bevorzugt von 1 % bis 15 %, besonders bevorzugt von 3 % bis 8 %, bezogen auf die Gesamtmenge der eingesetzten Monomere und dem Salz der Carbonsäure eingesetzt wird. Dann werden die erforderlichen Molekulargewichte im Vakuum bei Temperaturen von 160 bis ca. 240 °C durch Abdestillieren überstöchiometrischer Mengen der eingesetzten Glykole aufgebaut. Für die Reaktion eignen sich die bekannten Umesterungs- und Kondensationskatalysatoren des Standes der Technik, wie beispielsweise Titantetraisopropylat, Dibutylzinnoxid, Alkali- oder Erdalkalimetallalkoholate oder Antimontrioxid/Calciumacetat.

Ein bevorzugtes Verfahren zur Herstellung der Polyester ist dadurch gekennzeichnet, dass die Kondensation der Komponenten im Eintopfverfahren durchgeführt wird, wobei die Umesterungs- und Kondensationskatalysatoren vor dem Aufheizen zugegeben werden.

Die Polyester sind sehr gut wasserlöslich, zeigen keine Hydrolysetendenz und bilden stabile Lösungen, die auch unter verschärften äußeren Bedingungen (Lagerung bei 45 °C) keinen oder einen nur unwesentlichen Anstieg der Lösungsviskosität aufweisen.

Darüber hinaus zeigen die Polyester ein ausgezeichnetes Dispergiervermögen und wirken damit der Vergrauung der Textilien entgegen. Die Leistungsfähigkeit im Hinblick auf Steigerung des Primärwaschvermögens, der Soil Release Aktivität und Hydrophilisierung ist denen fester anionischer Typen vergleichbar.

Die Herstellung der Polyester-Konzentrat-Lösungen erfolgt durch Auflösen der entsprechenden Polyestermenge beispielsweise in Wasser oder in einer Kombination von Wasser mit wassermischbaren Lösungsmitteln, wie Propylenglykol, Ethanol, Isopropanol, t-Butanol, Ethylenglykol, Glykolmonomethylether, Glykoldimethylether, Diethylenglykol, Triethylenglykol, Polyethylenglykole (Masse > 120 g/mol). Dabei wird der Polyester bei Temperaturen von 10 bis 70 °C, bevorzugt 30 bis 60 °C, besonders bevorzugt 40 bis 50 °C, direkt oder portionsweise in das zur Lösung vorgelegte Wasser eingetragen und durch Rühren vollständig aufgelöst.

Zur Verbesserung der Löslichkeit der Polyester können auch niedermolekulare Dispergatoren (Hydrotrope) vor oder während des Auflösvorganges zugesetzt werden. Bevorzugt werden hierbei Alkylbenzolsulfonate eingesetzt, wie beispielsweise Natrium-Cumolsulfonat, Natrium-Xylolsulfonat oder Natrium-Toluolsulfonat. Es erwies sich als sinnvoll, diese Hydrotrope in einer Menge von 0,1 bis 30 Gew.-%, bevorzugt 1 bis 15 Gew.-%, bezogen auf das Gesamtgewicht des Konzentrats, einzusetzen.

Die Polyester-Konzentrate sind bei der Lagerung bei 20 bis 45 °C über mehrere Monate hinweg stabil. Die Viskositäten der Konzentrate bewegen sich im Bereich von 15 bis 15.000 mPas, bevorzugt 100 bis 8.000 mPas, besonders bevorzugt im Bereich von 500 bis 5:000 mPas.

Die Messung der Viskositäten erfolgt mittels eines Brookfield-Viskosimeters bei 20 Spindelumdrehungen pro Minute bei 25 °C. Die verwendete Spindel wird je nach Viskositätsbereich angepasst. Die Konzentrate sind annähernd farblos bis leicht gelblich und weitestgehend transparent bis opak und feststofffrei.

Die Polyester-Konzentrate verleihen den Textilfasern sehr gute schmutzablösende Eigenschaften, sie unterstützen das Schmutzablösevermögen der übrigen Waschmittelbestandteile gegenüber öligen, fettigen oder Pigmentanschmutzungen wesentlich und verhindern das Ablagern von Partikeln aus der Waschflotte (insbesondere Kalkseifen und Schmutzpigmente) auf das Textil (Vergrauung).

Die Wasch- und Reinigungsmittelformulierungen, in denen die Polyester eingesetzt werden können, sind pasten-, gelförmig oder flüssig. Besonders bevorzugt sind Flüssigwaschmittel.

Beispiele hierfür sind Vollwaschmittel, Feinwaschmittel, Colorwaschmittel, Wollwaschmittel, Gardinenwaschmittel, Baukastenwaschmittel.

Die Polyester-Konzentrate zeichnen sich überraschender Weise auch durch ein hervorragendes Ablaufverhalten, insbesondere beim Spülen von Plastik, Keramik und Glas und Metalloberflächen aus. Beim Reinigen harter Oberflächen wird die Tendenz zu Kalkablagerungen, sowie die Wiederanschmutzung der behandelten Oberfläche reduziert, das Anhaften von Öl und Schmutz erschwert und das erneute Reinigen der Oberflächen erleichtert.

Die Polyester-Konzentrate können somit auch in Haushaltsreinigungsmittel, beispielsweise Allzweckreiniger, Geschirrspülmittel, Klarspülmittel, Teppichreinigungs- und Imprägniermittel, Reinigungs- und Pflegemittel für Böden und andere harte Oberfläche, z. B. aus Kunststoff, Keramik, Glas, Stein, Metall oder mit Nanoteilchen beschichtete Oberflächen eingearbeitet werden.

Beispiele für technische Reinigungsmittel sind Kunststoffreinigungs- und Pflegemittel, etwa für Gehäuse und Autoarmaturen, sowie Reinigungs- und Pflegemittel für lackierte Oberflächen wie etwa Autokarosserien.

Die Formulierungen sind je nach ihrer vorgesehenen Anwendung in ihrer Zusammensetzung der Art der zu behandelnden oder zu waschenden Textilien oder der zu reinigenden Oberflächen anzupassen.

Die Wasch- und Reinigungsmittelformulierungen können gängige Inhaltsstoffe, wie Tenside, Emulgatoren, Gerüststoffe, Bleichkatalysatoren und -Aktivatoren, Sequestriermittel, Vergrauungsinhibitoren, Farbübertragungsinhibitoren, Farbfixiermittel, Enzyme, optische Aufheller, weich machende Komponente enthalten. Außerdem können Formulierungen oder Teile der Formulierung durch Farbstoffe und/oder Duftstoffe gezielt eingefärbt und/oder parfümiert werden.

### Beispiele:

### Polyester 1

In einem 1-I Vierhalskolben mit KPG-Rührer, Innenthermometer, Gaseinleitungsrohr und Destillierbrücke werden 203,6 g (2,68 Mol) 1,2-Propandiol, 66,4 g (1,07 Mol) Ethylenglykol, 72,9 g (0,35 Mol) Tetraethylenglykolmethylether, 291,3 g (1,50 Mol) Terephthalsäuredimethylester und 148,1 g (0,5 Mol) 5-Sulfoisophthalsäure-dimethylester-Na-Salz vorgelegt und das Reaktionsgemisch durch Einleitung von N₂ inertisiert. Im Gegenstrom werden anschließend 0,5 g Titantetraisopropylat und 0,3 g Natriumacetat zur Reaktionsmischung hinzugegeben. Das Gemisch wird auf ca. 160 °C ca. 15 bis 20 Minuten erhitzt. Bei dieser Temperatur beginnt die Umesterung; das entstehende Methanol wird abdestilliert.

Während der Destillation wird die Temperatur innerhalb von 3 h auf 210 °C erhöht. Anschließend wird auf 195 °C abgekühlt und innerhalb von 1 h der Druck auf 10 mbar reduziert. Während der dreistündigen Vakuumdestillation wird die Kondensation durch Abdestillation der überschüssigen Alkoholmenge vervollständigt. Für 5 Minuten wird das Vakuum auf 5 mbar reduziert, anschließend mit N₂ belüftet und die Schmelze auf Bleche ausgetragen.

### Polyester 2

In einem 1-I Vierhalskolben mit KPG-Rührer, Innenthermometer, Gaseinleitungsrohr und Destillierbrücke werden 210,6 g (2,77 Mol) 1,2-Propandiol, 60,5 g (0,98 Mol) Ethylenglykol, 72,9 g (0,35 Mol) Tetraethylenglykolmethylether, 291,3 g (1,50 Mol) Terephthalsäuredimethylester und 148,1 g (0,5 Mol) 5-Sulfoisophthalsäure-dimethylester-Na-Salz vorgelegt und das Reaktionsgemisch durch Einleitung von N₂ inertisiert. Im Gegenstrom werden anschließend 0,5 g Titantetraisopropylat und 0,3 g Natriumacetat zur Reaktionsmischung hinzugegeben. Das Gemisch wird auf ca. 160 °C ca. 15 bis 20 Minuten erhitzt. Das weitere Vorgehen erfolgt wie in "Polyester 1" beschrieben.

### Polyester 3

In einem 1-I Vierhalskolben mit KPG-Rührer, Innenthermometer, Gaseinleitungsrohr und Destillierbrücke werden 182,6 g (2,40 Mol) 1,2-Propandiol, 84,5 g (1,36 Mol) Ethylenglykol, 72,9 g (0,35 Mol) Tetraethylenglykolmethylether, 291,3 g (1,50 Mol) Terephthalsäuredimethylester und 148,1 g (0,50 Mol) 5-Sulfoisophthalsäure-dimethylester-Na-Salz vorgelegt und das Reaktionsgemisch durch Einleitung von N₂ inertisiert. Im Gegenstrom werden anschließend 0,5 g Titantetraisopropylat und 0,3 g Natriumacetat zur Reaktionsmischung hinzugegeben. Das Gemisch wird auf ca. 160 °C ca. 15 bis 20 Minuten erhitzt. Das weitere Vorgehen erfolgt wie in "Polyester 1" beschrieben.

### Polyester 16

In einem 1-I Vierhalskolben mit KPG-Rührer, Innenthermometer, Gaseinleitungsrohr und Destillierbrücke werden 136,8 g (1,8 Mol) 1,2-Propandiol, 6,2 g (0,1 Mol) Ethylenglykol, 109 g (0,56.Mol) Terephthalsäuredimethylester, 56,3 g (0,19 Mol) 5-Sulfoisophthalsäure-dimethylester-Na-Salz und 487 g (0,65 Mol) Methylpolyethylenglykol MG 750 vorgelegt und das Reaktionsgemisch durch Einleitung von N₂ inertisiert. Im Gegenstrom werden anschließend 0,26 g Titantetraisopropylat und 0,15 g Natriumacetat zur Reaktionsmischung hinzugegeben. Das Gemisch wird auf ca. 160 °C ca. 15 bis 20 Minuten erhitzt. Das weitere Vorgehen erfolgt wie in "Polyester 1" beschrieben.

### Polyester 4V (Vergleichsbeispiel)

In einem 1-I Vierhalskolben mit KPG-Rührer, Innenthermometer, Gaseinleitungsrohr und Destillierbrücke werden 233,0 g (3,75 Mol) Ethylenglykol, 72,9 g (0,35 Mol) Tetraethylenglykolmethylether, 291,3 g (1,50 Mol) Terephthalsäuredimethylester und 148,1 g (0,50 Mol) 5-Sulfoisophthalsäure-dimethylester-Na-Salz vorgelegt und das Reaktionsgemisch durch Einleitung von N₂ inertisiert. Im Gegenstrom werden anschließend 0,5 g Titantetraisopropylat und 0,3 g Natriumacetat zur Reaktionsmischung hinzugegeben. Das Gemisch wird auf ca. 160 °C ca. 15 bis 20 Minuten erhitzt. Das weitere Vorgehen erfolgt wie in "Polyester 1" beschrieben.

Die Herstellung der Konzentrate erfolgt in der Weise, dass man die Polymerisationsschmelze erkalten lässt, diese auf Korngrößen von 0,1 bis 3 mm vermahlt, mit der entsprechenden Menge Wasser versetzt und bei 30 bis 50 °C 2 bis 3 h bis zum vollständigen Lösen des Feststoffes mit einem Ankerrührer einrührt.

Auf diese Weise werden aus Polyester 1 bis 15 jeweils 40 gew.-%ige Konzentrate, mit Polyester 16 ein 60 gew.-%iges Konzentrat hergestellt.

**Tabelle 1: Löslichkeitsverhalten: 40 gew.-%ige wässrige Konzentrate bei 22 °C; Viskositätswerte, gemessen unmittelbar nach der Synthese und nach 28 Tagen.**

| Polyester | Viskosität bei 22 °C [mPas] am Tag 1 | Viskosität bei 22 °C [mPas] am Tag 28 |
|---|---|---|
| 1 | 500 | 650, klar |
| 2 | 450 | 650, klar bis opak |
| 3 | 800 | nach 17 Tagen leicht pastös |
| 4V | schnittfest | - |

| | | |
|---|---|---|
| Viskositätsmessung, Brookfield Spinell 2, 20 Umdrehungen, 22 °C | | |

Analog Beispiel 1 werden die in der Tabelle 2 angegebenen Polyester hergestellt und die Viskosität wie vorstehend beschrieben gemessen. Die Beispiele 5V bis 8V sind Vergleichsbeispiele.

**Tabelle 2**

| Polymer | DMT [Mol] | 5-SIM [Mol] | TetGME [Mol] | EG [Mol] | PG [Mol] | Aussehen, Viskosität [mPas], Tag 1 | Aussehen, Viskosität [mPas], Tag x |
|---|---|---|---|---|---|---|---|
| 5V | 3 | 1 | 1 | 1 | 1,05 | trüb, 30.000 | Tag 3, stichfest |
| 6V | 3 | 1 | 1 | 1 | 1,16 | trüb, 35.000 | Tag 3, stichfest |
| 7V | 3 | 1 | 1 | 1 | 1,28 | trüb, 20.000 | Tag 10, pastös |
| 8V | 3 | 1 | 1 | 1 | 1,42 | trüb, 1.000 | Tag 17 pastös |
| 9 | 3 | 1 | 1 | 1 | 1,61 | leicht trüb, 1.000 | Tag 28, leicht pastös |
| 10 | 3 | 1 | 1 | 1 | 1,97 | klar, 200 | Tag 28, leicht trüb, flüssig, 8.000 |
| 11 | 3 | 1 | 1 | 1 | 2,22 | klar, 190 | Tag 28, leicht trüb, flüssig, 5.200 |
| 12 | | 3 1 | 1 | 1 | 2,50 | klar, 340 | Tag 28, klar bis opak, flüssig, 5.000 |
| 13 | 3 | 1 | 1 | 1 | 2,84 | klar, 190 | Tag 28, klar, flüssig, 4.500 |
| 14 | 3 | 1 | 1 | 1 | 5,36 | leicht trüb, 350 | Tag 28, opak, flüssig, 6.000 |
| 15 | 3 | 1 | 1 | 1 | 8,51 | trüb, 580 | Tag 28, leicht trüb, flüssig, 7.500 |

| | | | | | | | |
|---|---|---|---|---|---|---|---|
| DMT = Terephthalsäuredimethylester 5-SIM = 5-Sulfoisophthalsäure-dimethylester-Na-Salz TetGME = Tetraethylenglykolmethylether EG = Ethylenglykol PG = 1,2-propylenglykol | | | | | | | |

Vergrauungsinhibierung an Polyester-Textilfasern (Testex PES 730):
Die Polymere werden in einer Konzentration von 60 ppm (Wirkstoff), bezogen auf das Testwaschmittel Formulierung (O), den jeweiligen Waschlaugen zugesetzt.
Die Waschlaugen enthalten 6 g/l der Formulierung "O". Zur Waschlauge werden 100 mg eines Olivenöl/Gasruß Gemisches hinzugesetzt und 5 min unter Rühren in der Waschflotte dispergiert. Anschließend wird in der so konditionierten Waschlauge weißes Polyestergewebe Testex PES 730 (Testfabrics Inc., USA) bei 20 °C für 20 Minuten, bei einer Wasserhärte von 15°dH-H2O/ Ca:Mg = 3:2;
   gewaschen.

Nach 4-maligem Spülen mit Frischwasser werden die Textgewebe zuerst getrocknet und anschließend ihr Weißgrad mit einem Elrepho Spektralphotometer bestimmt und die Remission gegen ein unbehandeltes Standardtestgewebe Testex PES 730 bestimmt. Remission [%, 457 nm] / 400 nm Kantenfilter.

Als Remission bezeichnet man den Weißgrad des verwendeten Textgewebes nach dem Waschen im Vergleich zu einem unbehandelten Gewebe (≡ 100 %). Je näher der Messwert (gemessen an einem Elrepho-Spektralphotometer) bei 100 % liegt, desto weißer ist das gemessene Testgewebe und umso effizienter ist der Polyester.

**Tabelle 3**

| Polyestergewebe Testex PES 730 | Formulierung "O" | Polyester 1 | Polyester 2 | Polyester 3 | Polyester 5V |
|---|---|---|---|---|---|
| 69,5 | 69,4 | 84.9 | 85,1 | 81,1 | 78,4 |

### Formulierung (O):

### Bestandteile in Gewichtsprozenten:

| | | |
|---|---|---|
| A | Kali-Kokos-Seife (27 %ig) | 3 % |
| B | 1,2-Propandiol | 5 % |
| C | Genapol LA-070 (Clariant) | 4 % |
| | Laurylalkoholethoxylate, 7EO | |
| D | Alkylbenzolsulfonat (Marlon A350 / 50 %ig) | 17 % |
| E | Natriumcumolsulfonat | 0,5 % |
| F | Zitronensäure (30 %ige-Lsg.) | 0,6 % |
| G | Wasser | ad 100 |
| pH-Wert: | | 7,5 - 7,6 |

## Patentansprüche

1. Verwendung eines wässrigen Polyester-Konzentrats mit einem Gewichtsanteil an Polyester von 12 bis 60 %, wobei die Polyester erhältlich sind durch Polymerisation der Komponenten, ausgewählt aus
a) einer oder mehreren sulfogruppenfreien aromatischen Dicarbonsäuren und/ oder deren Salzen und/ oder deren Anhydriden und/oder deren Ester,
b) optional einer oder mehreren sulfogruppenhaltigen Dicarbonsäuren, deren Salzen und/oder deren Anhydriden und/oder deren Ester,
c) 1,2-Propylenglykol,
d) Ethylenglykol,
e) einer oder mehreren Verbindungen der Formel (1)
R¹O(CHR₂CHR³O)ₙH (1)
wobei
R¹ für eine lineare oder verzweigte, gesättigte oder ungesättigte Alkylgruppe mit 1 bis 22 C-Atomen steht,
R² und R³ unabhängig voneinander für Wasserstoff oder für eine Alkylgruppe mit 1 bis 4 Kohlenstoffatomen, und
n eine Zahl von 1 bis 50 ist,
f) optional eine oder mehrere Verbindungen der Formel (2)
H-(OCH₂CH₂) ₘ-SO₃X (2)
wobei
m für eine Zahl 1 bis 10 und
X für Wasserstoff oder ein Alkalimetallion steht, und
g) optional ein oder mehrere vernetzend wirkende polyfunktionelle Verbindungen,
mit der Maßgabe, dass mindestens eine der Komponenten b) oder f) vorhanden ist, und mit der weiteren Maßgabe, dass das molare Verhältnis der Komponenten c) 1,2-Propylenglykol zu d) Ethylenglykol größer oder gleich 1,60 ist,
in Wasch- und Reinigungsmitteln, in einem Weichspülmittel, in Textilptlegemitteln und Mitteln zur Ausrüstung von Textilien.

2. Verwendung gemäß Anspruch 1, **dadurch gekennzeichnet, dass** das molare Verhältnis 1,2-Propylenglykol: Ethylenglykol 1,60 bis 20,0 beträgt.

3. Verwendung gemäß Anspruch 1 oder 2, **dadurch gekennzeichnet, dass** der Gewichtsanteil an Polyester 20 bis 60 % beträgt.

4. Verwendung nach einem oder mehreren der Ansprüche 1 bis 3, **dadurch gekennzeichnet, dass** die Polyester durch Polymerisation der Komponenten a) bis g) in folgenden Molverhältnissen, bezogen auf 1 Mol Komponente a):
0 bis 4 Mol Komponente b),
0,1 bis 4 Mol der Summe der Komponenten c) + d),
0,1 bis 4 Mol Komponente e),
0 bis 4 Mol Komponente f),
0 bis 0,2 Mol Komponente g),
erhältlich sind.

5. Verwendung nach mindestens einem der Ansprüche 1 bis 3, **dadurch gekennzeichnet, dass** die Polyester durch Polymerisation der Komponenten a) bis g) in folgenden Molverhältnissen, bezogen auf 1 Mol Komponente a):
0,1 bis 2 Mol Komponente b),
0,5 bis 4 Mol der Summe der Komponenten c) + d),
0,1 bis 4 Mol Komponente e),
0 Mol Komponente f),
0 Mol Komponente g),
erhältlich sind.

6. Verwendung nach einem oder mehreren der Ansprüche 1 bis 5, **dadurch gekennzeichnet, dass** Komponente a) eine Verbindung aus der Gruppe Terephthalsäure, C₁-C₄-Alkylester der Terephthalsäure, Isophthalsäure und C₁-C₄-Alkylester der Isophthalsäure ist.

7. Verwendung nach einem oder mehreren der Ansprüche 1 bis 6, **dadurch gekennzeichnet, dass** Komponente b) eine Verbindung aus der Gruppe 5-Sulfoisophthalsäure, Alkalimetallsalze der 5-Sulfoisophthalsäure, 5-Sulfoisophthalsäuredi(C₁-C₄)alkylester und 5-Sulfoisophthalsäuredi(C₁-C₄-alkyl)ester-Alkalimetallsalz ist.

8. Verwendung nach einem oder mehreren der Ansprüche 1 bis 7, **dadurch gekennzeichnet, dass** Komponente e) ein Polyethylenglykolmonomethylether der Formel (1a) ist
CH₃-O-(C₂H₄O)ₙ-H (1a)
mit n = 2 bis 10.

9. Verwendung nach einem oder mehreren der Ansprüche 1 bis 8 als Soil Release Polymer.

10. Verwendung nach einem oder mehreren der Ansprüche 1 bis 9 als Dispergator.

11. Verwendung nach einem oder mehreren der Ansprüche 1 bis 10 zum Entgegenwirken gegen die Vergrauung von Textilien.

## Claims

1. The use of an aqueous polyester concentrate having a proportion by weight of polyester of 12 to 60%, the polyesters being obtainable by polymerizing the components selected from
a) one or more sulfo-free aromatic dicarboxylic acids and/or salts thereof and/or anhydrides thereof and/or esters thereof,
b) optionally one or more sulfo-containing dicarboxylic acids, salts thereof and/or anhydrides thereof and/or esters thereof,
c) 1,2-propylene glycol,
d) ethylene glycol,
e) one or more compounds of the formula (1)
R¹O(CHR²CHR³O)ₙH (1)
where
R¹ is a linear or branched, saturated or unsaturated alkyl group having 1 to 22 carbon atoms,
R² and R³ are each independently hydrogen or an alkyl group having 1 to 4 carbon atoms, and
n is a number from 1 to 50,
f) optionally one or more compounds of the formula (2)
H-(OCH₂CH₂)ₘ-SO₃X (2)
where
m is a number from 1 to 10 and
X is hydrogen or an alkali metal ion, and
g) optionally one or more crosslinking polyfunctional compounds,
with the proviso that at least one of components b) or f) is present, and with the further proviso that the molar ratio of components c) 1,2-propylene glycol to d) ethylene glycol is greater than or equal to 1.60,
in washing and cleaning compositions, in a fabric softener, in textile care compositions and textile finishing compositions.

2. The use as claimed in claim 1, wherein the molar ratio of 1,2-propylene glycol : ethylene glycol is 1.60 to 20.0.

3. The use as claimed in claim 1 or 2, wherein the proportion by weight of polyester is 20 to 60%.

4. The use as claimed in one or more of claims 1 to 3, wherein the polyesters are obtainable by polymerizing components a) to g) in the following molar ratios, based on 1 mol of component a):
0 to 4 mol of component b),
0.1 to 4 mol of the sum of components c) + d),
0.1 to 4 mol of component e),
0 to 4 mol of component f),
0 to 0.2 mol of component g).

5. The use as claimed in at least one of claims 1 to 3, wherein the polyesters are obtainable by polymerizing components a) to g) in the following molar ratios, based on 1 mol of component a):
0.1 to 2 mol of component b),
0.5 to 4 mol of the sum of components c) + d),
0.1 to 4 mol of component e),
0 mol of component f),
0 mol of component g).

6. The use as claimed in one or more of claims 1 to 5, wherein component a) is a compound from the group of terephthalic acid, C₁-C₄-alkyl esters of terephthalic acid, isophthalic acid and C₁-C₄-alkyl esters of isophthalic acid.

7. The use as claimed in one or more of claims 1 to 6, wherein component b) is a compound from the group of 5-sulfoisophthalic acid, alkali metal salts of 5-sulfoisophthalic acid, di(C₁-C₄)alkyl 5-sulfoisophthalates and di(C₁-C₄-alkyl) 5-sulfoisophthalate alkali metal salts.

8. The use as claimed in one or more of claims 1 to 7, wherein component e) is a polyethylene glycol monomethyl ether of the formula (1a)
CH₃-O-(C₂H₄O)ₙ-H (1a)
where n = 2 to 10.

9. The use as claimed in one or more of claims 1 to 8 as a soil release polymer.

10. The use as claimed in one or more of claims 1 to 9 as a dispersant.

11. The use as claimed in one or more of claims 1 to 10 for counteracting the graying of textiles.

## Revendications

1. Utilisation d'un concentré de polyesters aqueux ayant une proportion en poids de polyesters de 12 à 60 %, les polyesters pouvant être obtenus par polymérisation des composants choisis parmi
a) un ou plusieurs acides dicarboxyliques aromatiques exempts de groupes sulfo et/ou leurs sels et/ou leurs anhydrides et/ou leurs esters,
b) éventuellement un ou plusieurs acides dicarboxyliques contenant des groupes sulfo, leurs sels et/ou leurs anhydrides et/ou leurs esters,
c) le 1,2-propylène glycol,
d) l'éthylène glycol,
e) un ou plusieurs composés de formule (1)
R¹O(CHR²CHR³O)ₙH (1)
dans laquelle
R¹ représente un groupe alkyle linéaire ou ramifié, saturé ou insaturé, de 1 à 22 atomes C,
R² et R³ représentent indépendamment l'un de l'autre l'hydrogène ou un groupe alkyle de 1 à 4 atomes de carbone, et
n représente un nombre de 1 à 50,
f) éventuellement un ou plusieurs composés de formule (2)
H- (OCH₂CH₂)ₘ-SO₃X (2)
dans laquelle
m représente un nombre de 1 à 10, et
X représente l'hydrogène ou un ion de métal alcalin,
et
g) éventuellement un ou plusieurs composés polyfonctionnels à effet réticulant,
à condition qu'au moins un des composants b) ou f) soit présent et également à condition que le rapport molaire entre les composants c) 1,2-propylène glycol et d) éthylène glycol soit supérieur ou égal à 1,60,
dans des agents détergents, dans un adoucissant, dans des agents d'entretien des textiles et des agents de traitement des textiles.

2. Utilisation selon la revendication 1, **caractérisée en ce que** le rapport molaire 1,2-propylène glycol : éthylène glycol est de 1,60 à 20,0.

3. Utilisation selon la revendication 1 ou 2, **caractérisée en ce que** la proportion en poids de polyesters est de 20 à 60 %.

4. Utilisation selon une ou plusieurs des revendications 1 à 3, **caractérisée en ce que** les polyesters peuvent être obtenus par polymérisation des composants a) à g) en les rapports molaires suivants, par rapport à 1 mol du composant a) :
0 à 4 mol du composant b),
0,1 à 4 mol de la somme des composants c) + d),
0,1 à 4 mol du composant e),
0 à 4 mol du composant f),
0 à 0,2 mol du composant g).

5. Utilisation selon au moins l'une quelconque des revendications 1 à 3, **caractérisée en ce que** les polyesters peuvent être obtenus par polymérisation des composants a) à g) en les rapports molaires suivants, par rapport à 1 mol du composant a) :
0,1 à 2 mol du composant b),
0,5 à 4 mol de la somme des composants c) + d),
0,1 à 4 mol du composant e),
0 mol du composant f),
0 mol du composant g).

6. Utilisation selon une ou plusieurs des revendications 1 à 5, **caractérisée en ce que** le composant a) est un composé du groupe constitué par l'acide téréphtalique, un ester alkylique en C₁-C₄ de l'acide téréphtalique, l'acide isophtalique et un ester alkylique en C₁-C₄ de l'acide isophtalique.

7. Utilisation selon une ou plusieurs des revendications 1 à 6, **caractérisée en ce que** le composant b) est un composé du groupe constitué par l'acide 5-sulfoisophtalique, les sels de métaux alcalins de l'acide 5-sulfoisophtalique, un ester di-(alkylique en C₁-C₄) de l'acide 5-sulfoisophtalique et un sel de métal alcalin d'un ester di-(alkylique en C₁-C₄) de l'acide 5-sulfoisophtalique.

8. Utilisation selon une ou plusieurs des revendications 1 à 7, **caractérisée en ce que** le composant e) est un éther monométhylique de polyéthylène glycol de formule (1a)
CH₃-O-(C₂H₄O)ₙ-H (1a)
avec n = 2 à 10.

9. Utilisation selon une ou plusieurs des revendications 1 à 8, en tant que polymère antisalissure.

10. Utilisation selon une ou plusieurs des revendications 1 à 9, en tant que dispersant.

11. Utilisation selon une ou plusieurs des revendications 1 à 10, pour lutter contre le grisonnement des textiles.
